# EUROPEAN PATENT SPECIFICATION

(11) **EP 3 572 662 B1**
(45) Date of publication and mention of the grant of the patent: **06.04.2022**
(21) Application number: 19175703.8
(22) Date of filing: 21.05.2019
(51) Int. Cl.: F02M 37/00, F02D 33/00, F16L 55/05, F16L 55/033

(54) **FUEL SYSTEM WITH A PRESSURE PULSATION DAMPER**
KRAFTSTOFFSYSTEM MIT DRUCKPULSATIONSDÄMPFER
SYSTÈME DE CARBURANT AVEC AMORTISSEUR DE PULSATION DE PRESSION

(30) Priority: 22.05.2018 US 201815986134
(43) Date of publication of application: 27.11.2019
(73) Proprietor: Delphi Technologies IP Limited, Saint Michael (BB)
(72) Inventor: CHAVEZ, Isai, Anthony, New Mexico 88021 (US); PORRAS, Luis M., 32545 Cd. Juarez, Chihuahua (MX)
(74) Representative: Office Freylinger

(56) References cited:
- WO-A1-2018/078504
- DE-A1- 19 528 737
- JP-A- 2000 213 434
- KR-U- 19980 045 606
- US-A- 5 682 923
- US-A- 6 076 557
- US-A1- 2005 034 710

## Description

### TECHNICAL FIELD OF INVENTION

The present invention relates to a fuel system for an internal combustion engine, more particularly to such a fuel system which includes a pressure pulsation damper for mitigating pressure pulsations of a fuel pump of the fuel system.

### BACKGROUND OF INVENTION

Internal combustion engines which utilize liquid fuel are well known, for example, to provide propulsion in motor vehicles. Fuel systems for delivering liquid fuel to the internal combustion engine are also well known. Such fuel systems typically include a fuel tank which holds a volume of fuel and one or more fuel pumps for pumping fuel from the fuel tank to the internal combustion engine. It is known for the fuel pump to take any one of numerous forms which can generally be divided into positive displacement pumps and regenerative pumps of which numerous variations exist such as gerotor, turbine, roller vane, gear, and piston pumps. Each type of fuel pump may produce pressure pulsations which, if left unmitigated, may produce noise that is undesirable. In some situations as described in JP2000 213434 A, US 6 076 557 A and DE 195 28 737 A1, a fuel pressure regulator which regulates pressure downstream of the fuel pump may inherently provide some damping of the pressure pulsations, however, the fuel pressure regulator may not address the pressure pulsations in the frequency range of concern.

### SUMMARY OF THE INVENTION

Briefly described, a fuel system according to claim 1 is provided for an internal combustion engine. The fuel system includes an outlet conduit having an internal volume and also having an exterior surface that is exposed to an environment. The fuel system also includes a pressure pulsation damper wall made of a resilient and compliant polymer material which defines a pressure pulsation damper chamber. When the pressure pulsation damper chamber is filled with fuel, the pressure pulsation damper wall extends along, and is centered about, a pressure pulsation damper axis such that the pressure pulsation damper wall circumferentially surrounds the pressure pulsation damper axis, thereby defining the pressure pulsation damper chamber which is circumferentially surrounded by the pressure pulsation damper wall, the pressure pulsation damper wall having an inner wall surface which is in fluid communication with the internal volume of the outlet conduit and also having an outer wall surface which is exposed to the environment.

In the fuel system, when the pressure pulsation damper chamber is filled with fuel, the pressure pulsation damper wall may include a first active portion which diverges away from the pressure pulsation damper axis in a first direction along the pressure pulsation damper axis and may also include a second active portion which extends from the first active portion and converges toward the pressure pulsation damper axis in the first direction along the pressure pulsation damper axis.

The second active portion may terminate at an apex; and the pressure pulsation damper axis may intersect with the second active portion at the apex.

The outer wall surface may be a surface of revolution about the pressure pulsation damper axis.

The pressure pulsation damper wall may include an attachment portion which circumferentially surrounds, and circumferentially engages, a port of the outlet conduit.

Within the fuel system, the pressure pulsation damper wall may include a first active portion which extends from the attachment portion and which diverges away from the pressure pulsation damper axis in a first direction along the pressure pulsation damper axis and the pressure pulsation damper wall also includes a second active portion which may extend from the first active portion and converges toward the pressure pulsation damper axis in the first direction along the pressure pulsation damper axis.

The second active portion may terminate at an apex; and the pressure pulsation damper axis intersects the second active portion at the apex.

The fuel system may further comprise a fuel tank defining a fuel tank volume therein, whereby the fuel tank volume is the environment.

According to the invention, the fuel system further comprises: a second pressure pulsation damper which includes a second pressure pulsation damper wall made of a resilient and compliant polymer material which defines a second pressure pulsation damper chamber, whereby when the second pressure pulsation damper chamber is filled with fuel, the second pressure pulsation damper wall extends along, and is centered about, a second pressure pulsation damper axis such that the second pressure pulsation damper wall circumferentially surrounds the second pressure pulsation damper axis, thereby defining the second pressure pulsation damper chamber which is circumferentially surrounded by the second pressure pulsation damper wall, the second pressure pulsation damper wall having a second inner wall surface which is in fluid communication with the internal volume of the outlet conduit and also having a second outer wall surface which is exposed to the environment.

The fuel pump of the fuel system may further comprise an inlet, an outlet, and a pumping element which may be configured to receive fuel from the inlet and is configured to pump fuel to the outlet, whereby the outlet is in fluid communication with the internal volume of the outlet conduit such that the outlet is in series between the inlet and the pressure pulsation damper.

The pressure pulsation damper chamber may be filled with fuel, the pressure pulsation damper wall may include a first active portion which diverges away from the pressure pulsation damper axis in a first direction along the pressure pulsation damper axis and also includes a second active portion which may extend from the first active portion and converges toward the pressure pulsation damper axis in the first direction along the pressure pulsation damper axis.

Within the fuel system:
the second active portion may terminate at an apex; and
the pressure pulsation damper axis may intersect the second active portion at the apex.

The outer wall surface may be a surface of revolution about the pressure pulsation damper axis.

The pressure pulsation damper wall may also include an attachment portion which circumferentially surrounds, and circumferentially engages, a port of the outlet conduit.

In the fuel system the pressure pulsation damper wall may include a first active portion which extends from the attachment portion and which diverges away from the pressure pulsation damper axis in a first direction along the pressure pulsation damper axis and the pressure pulsation damper wall also includes a second active portion which extends from the first active portion and converges toward the pressure pulsation damper axis in the first direction along the pressure pulsation damper axis.

Within the fuel system:
the second active portion may terminate at an apex; and
the pressure pulsation damper axis may intersect the second active portion at the apex.

The fuel system may further comprise a fuel tank defining a fuel tank volume therein, wherein the fuel tank volume is the environment.

According to the invention, the fuel system further comprises:
a second pressure pulsation damper which includes a second pressure pulsation damper wall made of a resilient and compliant polymer material which defines a second pressure pulsation damper chamber, whereby when the second pressure pulsation damper chamber is filled with fuel, the second pressure pulsation damper wall may extend along, and is centered about, a second pressure pulsation damper axis such that the second pressure pulsation damper wall circumferentially surrounds the second pressure pulsation damper axis, thereby defining the second pressure pulsation damper chamber which is circumferentially surrounded by the second pressure pulsation damper wall, the second pressure pulsation damper wall having a second inner wall surface which is in fluid communication with the internal volume of the outlet conduit and also having a second outer wall surface which is exposed to the environment.

Further features and advantages of the invention will appear more clearly on a reading of the following detailed description of the preferred embodiment of the invention, which is given by way of non-limiting example only and with reference to the accompanying drawings.

### BRIEF DESCRIPTION OF DRAWINGS

This invention will be further described with reference to the accompanying drawings in which:
FIG. 1 is a schematic view of a fuel system with only one pressure pulsation damper which is part of the present invention;
FIG. 2 is an exploded isometric view of a fuel pump of the fuel system in accordance with the present invention;
FIG. 3 is a cross-sectional view of the fuel pump of FIG. 2;
FIG. 4 is an elevation view of an outlet conduit including a pressure pulsation damper of the fuel system with only one pressure pulsation damper which is part of the present invention;
FIG. 5 is a cross-sectional view of the outlet conduit and pressure pulsation damper of FIG. 4;
FIG. 6 is the cross-sectional view of FIG. 5, now additionally showing a wall of the pressure pulsation damper expanded as a result of a pressure pulsation; and
FIG. 7 is a cross-sectional view of an outlet conduit and two pressure pulsations dampers in accordance with the present invention.

### DETAILED DESCRIPTION OF INVENTION

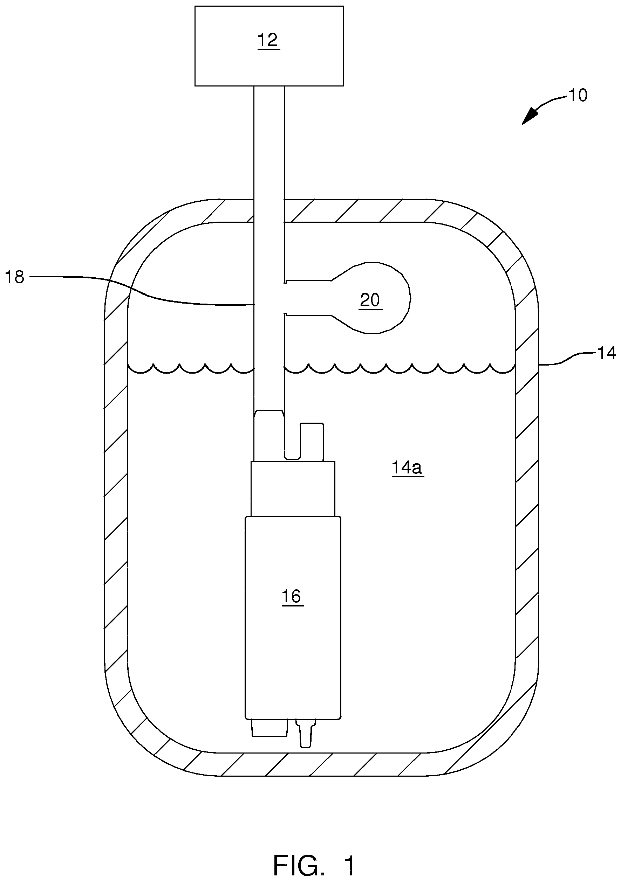

In accordance with a preferred embodiment of this invention and referring initially to FIG. 1, a fuel system 10 is shown in schematic form for providing liquid fuel to an internal combustion engine 12. Fuel system 10 includes a fuel tank 14 defining a fuel tank volume 14a therein for storing liquid fuel which is used to fuel internal combustion engine 12. The liquid fuel stored in fuel tank 14 may be gasoline, ethanol, a blend of gasoline and ethanol, diesel fuel, or any other liquid fuel that may be used to fuel internal combustion engine 12. A fuel pump 16 is disposed inside fuel tank 14 in order to convey liquid fuel out of fuel tank 14 through an outlet conduit 18. Fuel pump 16 is typically capable of supplying liquid fuel at a pressure in the range of 400 kPa to 600 kPa with a typical desired pressure being 500 kPa. A pressure pulsation damper 20 is provided in fluid communication with outlet conduit 18 in order to mitigate pressure pulsations generated by fuel pump 16 where the pressure pulsations, if left unmitigated, may produce noise that is undesirable. While fuel system 10 has been illustrated herein as including fuel tank 14, fuel pump 16, outlet conduit 18, and pressure pulsation damper 20, those of ordinary skill in the art of fuel systems will readily recognize that other elements may typically be included which may include, by way of non-limiting example only, a fuel filter (not shown) on the output side of fuel pump 16 in order to filter contaminants out of the liquid fuel before the liquid fuel is conveyed to other components of fuel system 10, a check valve (not shown) on the output side of fuel pump 16 and downstream of the fuel filter in order to prevent backflow of fuel into fuel pump 16, and a fuel pressure regulator (not shown) on the output side of fuel pump 16 and downstream of the check valve in order to regulate the pressure of the liquid fuel that is being conveyed out of fuel tank 14 to a predetermined pressure. While fuel pump 16 has been illustrated herein as being located within fuel tank 14, fuel pump 16 may alternatively be located outside of fuel tank 14.

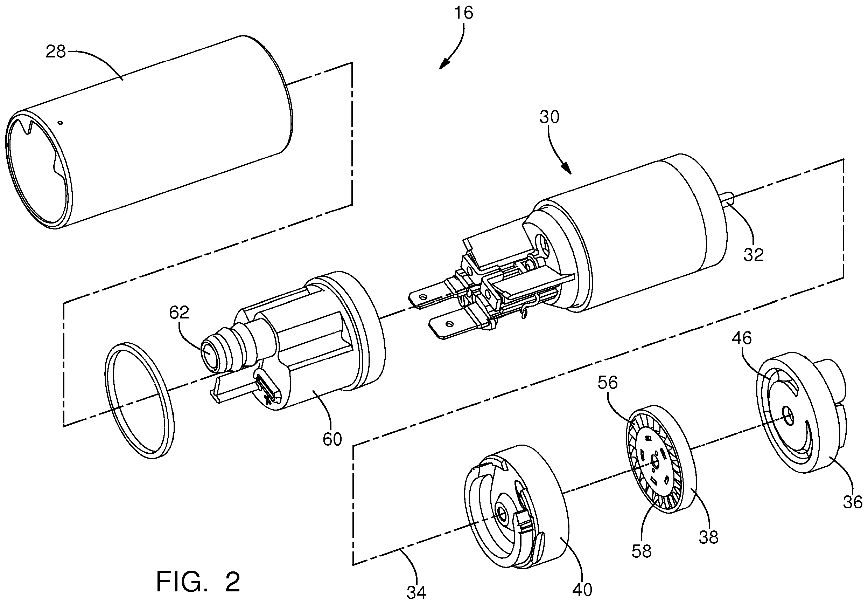

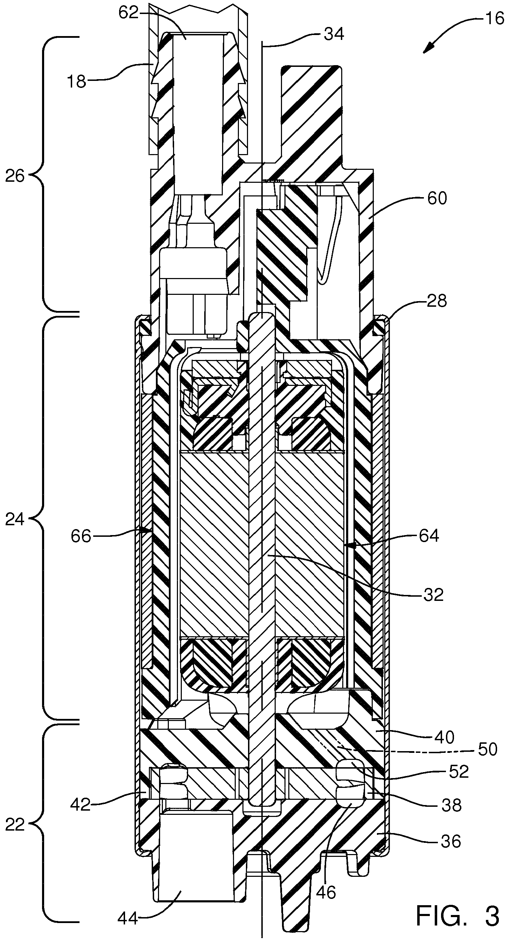

Fuel pump 16 may take any one of numerous forms, but will be described herein by way of non-limiting example only with reference to FIGS. 2 and 3 where fuel pump 16 is embodied as a regenerative fuel pump. Fuel pump 16 generally incudes includes a pump section 22 at one end, a motor section 24 adjacent to pump section 22, and an outlet section 26 adjacent to motor section 24 at the end of fuel pump 16 opposite pump section 22. A housing 28 of fuel pump 16 retains pump section 22, motor section 24 and outlet section 26 together. Fuel enters fuel pump 16 at pump section 22, a portion of which is rotated by motor section 24 as will be described in more detail later, and is pumped past motor section 24 to outlet section 26 where the fuel exits fuel pump 16.

Motor section 24 includes an electric motor 30 which is disposed within housing 28. Electric motor 30 includes a shaft 32 extending therefrom into pump section 22. Shaft 32 rotates about a fuel pump axis 34 when an electric current is applied to electric motor 30. Electric motor 30 will be described in greater detail later.

With continued reference to FIGS. 2 and 3, pump section 22 includes an inlet plate 36, a pumping element illustrated as impeller 38, and an outlet plate 40. Inlet plate 36 is disposed at the end of pump section 22 that is distal from motor section 24 while outlet plate 40 is disposed at the end of pump section 22 that is proximal to motor section 24. Both inlet plate 36 and outlet plate 40 are fixed relative to housing 28 to prevent relative movement between inlet plate 36 and outlet plate 40 with respect to housing 28. Outlet plate 40 defines a spacer ring 42 on the side of outlet plate 40 that faces toward inlet plate 36. Impeller 38 is disposed axially between inlet plate 36 and outlet plate 40 such that impeller 38 is radially surrounded by spacer ring 42. Impeller 38 is fixed to shaft 32 such that impeller 38 rotates with shaft 32 in a one-to-one relationship. Spacer ring 42 is dimensioned to be slightly thicker than the dimension of impeller 38 in the direction of fuel pump axis 34, i.e. the dimension of spacer ring 42 in the direction of fuel pump axis 34 is greater than the dimension of impeller 38 in the direction of fuel pump axis 34. In this way, inlet plate 36, outlet plate 40, and spacer ring 42 are fixed within housing 28, for example by crimping the axial ends of housing 28. Axial forces created by the crimping process will be carried by spacer ring 42, thereby preventing impeller 38 from being clamped tightly between inlet plate 36 and outlet plate 40 which would prevent impeller 38 from rotating freely. Spacer ring 42 is also dimensioned to have an inside diameter that is larger than the outside diameter of impeller 38 to allow impeller 38 to rotate freely within spacer ring 42 and axially between inlet plate 36 and outlet plate 40. While the pumping element has been illustrated as impeller 38, it should now be understood that other pumping elements may alternatively be used, by way of non-limiting example only, a gerotor, gears, or roller vanes. Furthermore, while spacer ring 42 is illustrated as being made as a single piece with outlet plate 40, it should be understood that spacer ring 42 may alternatively be made as a separate piece that is captured axially between outlet plate 40 and inlet plate 36.

Inlet plate 36 is generally cylindrical in shape, and includes an inlet 44 that extends through inlet plate 36 in the same direction as fuel pump axis 34. Inlet 44 is a passage which introduces fuel into fuel pump 16. Inlet plate 36 also includes an inlet plate flow channel 46 formed in the face of inlet plate 36 that faces toward impeller 38. Inlet plate flow channel 46 is in fluid communication with inlet 44.

Outlet plate 40 is generally cylindrical in shape and includes an outlet plate outlet passage 50 that extends through outlet plate 40 in the same direction as fuel pump axis 34 where it should be noted that outlet plate outlet passage 50 is an outlet for pump section 22. Outlet plate outlet passage 50 is in fluid communication with outlet section 26 as will be describe in more detail later. Outlet plate 40 also includes an outlet plate flow channel 52 formed in the face of outlet plate 40 that faces toward impeller 38. Outlet plate flow channel 52 is in fluid communication with outlet plate outlet passage 50.

Impeller 38 includes a plurality of impeller blades 56 arranged in a polar array radially surrounding, and centered about, fuel pump axis 34 such that impeller blades 56 are aligned with inlet plate flow channel 46 and outlet plate flow channel 52. Impeller blades 56 are each separated from each other by an impeller blade chamber 58 that passes through impeller 38 in the general direction of fuel pump axis 34. Impeller 38 may be made, for example only, by a plastic injection molding process in which the preceding features of impeller 38 are integrally molded as a single piece of plastic.

Electric motor 30 includes a rotor or armature 64 which rotates about fuel pump axis 34 when an electric current is applied and also includes a stator 66 which remains stationary within housing 28 during operation. Electric motors and their operation are well known and will not be described further herein.

In operation, inlet 44 is exposed to fuel in fuel tank 14 which is to be pumped to internal combustion engine 12. An electric current is supplied to electric motor 30 in order to rotate shaft 32 and impeller 38. As impeller 38 rotates, fuel is drawn through inlet 44 into inlet plate flow channel 46. Impeller blade chambers 58 allow fuel from inlet plate flow channel 46 to flow to outlet plate flow channel 52. Impeller 38 subsequently discharges the fuel through outlet plate outlet passage 50 and consequently through outlet 62 which is connected to outlet conduit 18.

Additional features of fuel pump 16 as embodied herein are described in United States Patent Application Publication No. US 2014/0314591 A1 to Herrera et al.. While fuel pump 16 has been embodied herein as a regenerative fuel pump, fuel pump 16 may alternatively take other forms, which may be, by way of non-limiting example only a positive displacement pump such as those shown in United States Patent Application Publication No. US 2016/0245284 A1 to Moreno et al. and United States Patent Application Publication No. 2014/0102417 A1 to Rosu et al.. Furthermore, while fuel pump 16 has been illustrated as being located within fuel tank 14, it should be understood that fuel pump 16 may alternatively be located outside of fuel tank 14.

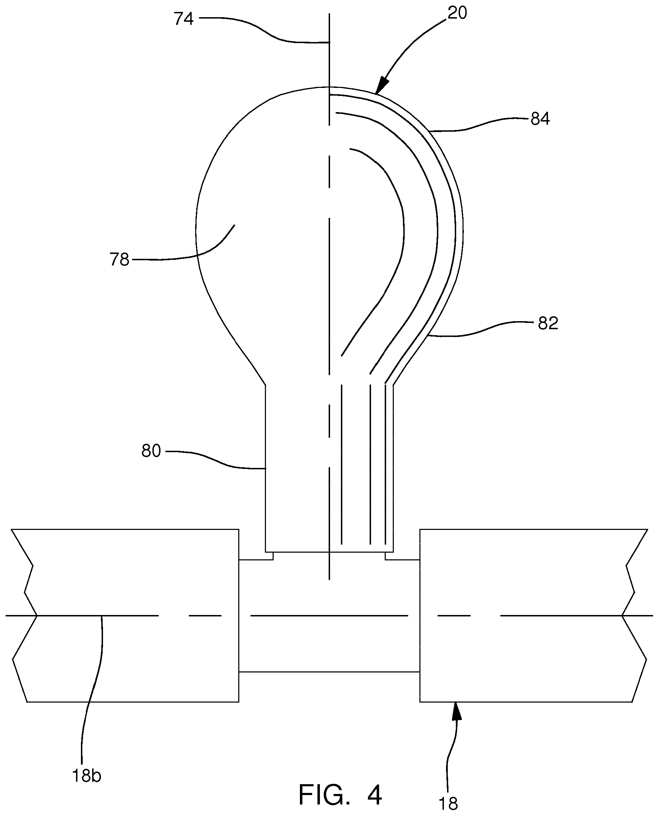

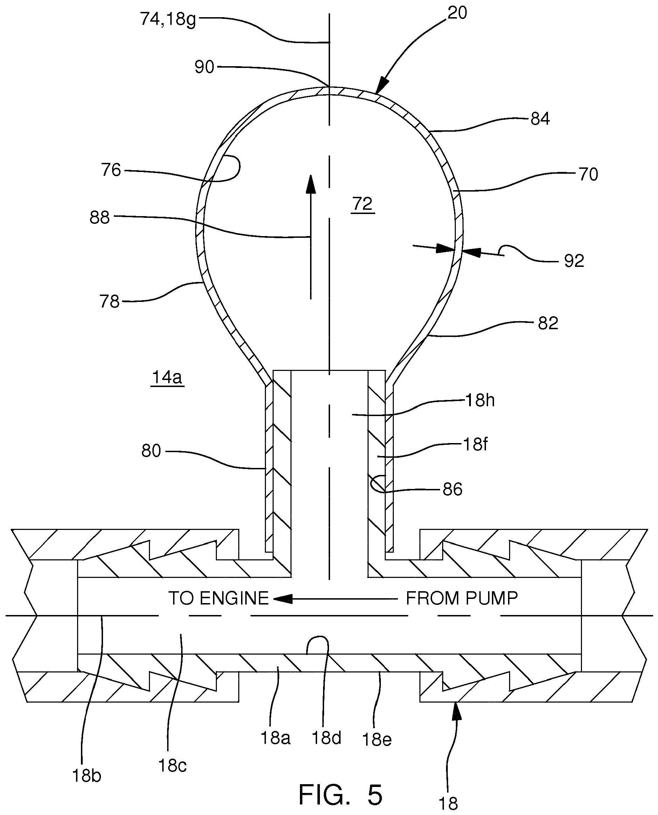

Now with particular reference to FIGS. 4-6, outlet conduit 18 includes a tubular wall 18a which extends along an outlet conduit axis 18b such that an outlet conduit internal volume 18c is defined within tubular wall 18a, and consequently, outlet conduit 18 includes an interior surface 18d which is in contact with the fuel in operation and also includes an exterior surface 18e which is exposed to, i.e. in direct contact with, an environment, which as embodied herein is fuel tank volume 14a. Outlet conduit 18 also includes a port 18f which is centered about, and extends along, a port axis 18g where port axis 18g may be perpendicular to outlet conduit axis 18b as shown, or may alternatively be at some other angle relative to outlet conduit axis 18b. Port 18f is tubular, thereby defining a port internal volume 18h therein such that port internal volume 18h is in fluid communication with outlet conduit internal volume 18c. As shown in FIGS. 4-6, outlet conduit 18 may be made of multiple components that are assembled to each other, or alternatively outlet conduit 18 may be a single piece of material, for example, molded plastic. By way of non-limiting example only, outlet conduit 18 may include a Tee fitting which defines port 18f and may also include two hoses connected to the Tee fitting, one of which receives fuel from fuel pump 16 and the other of which communicates fuel to internal combustion engine 12.

With continued particular reference to FIGS. 4-6, pressure pulsation damper 20 includes a pressure pulsation damper wall 70 which is made of a resilient and compliant polymer material which defines a pressure pulsation damper chamber 72. By way of non-limiting example only, pressure pulsation damper wall 70 may be made of a fluorocarbon material, a fluorosilicone rubber material, or a plastic material. According to the invention, pressure pulsation damper wall 70 is sufficiently compliant such that prior to being filled with fuel supplied under pressure by fuel pump 16, pressure pulsation damper wall 70 is limp and has an undefined shape, similar to a common party balloon prior to being inflated. Consequently, the subsequent description will be provided with the understanding that pressure pulsation damper wall 70 is filled with fuel under normal operating pressure of fuel pump 16.

Pressure pulsation damper wall 70 extends along, and is centered about, a pressure pulsation damper axis 74 which may be coincident with port axis 18g as shown where pressure pulsation damper wall 70 circumferentially surrounds pressure pulsation damper axis 74. In this way, pressure pulsation damper chamber 72 is circumferentially surrounded by pressure pulsation damper wall 70. Pressure pulsation damper wall 70 includes an inner wall surface 76 which is in fluid communication with outlet conduit internal volume 18c via port internal volume 18h. Pressure pulsation damper wall 70 also includes an outer wall surface 78 which is opposed to inner wall surface 76 such that outer wall surface 78 is exposed to, i.e. in direct contact with, the same environment as exterior surface 18e, which as embodied herein is fuel tank volume 14a. Inner wall surface 76 and outer wall surface 78 are each a surface of revolution about pressure pulsation damper axis 74.

Pressure pulsation damper wall 70 generally includes an attachment portion 80, a first active portion 82 which extends from attachment portion 80, and a second active portion 84 which extends from first active portion 82 such that first active portion 82 is located between attachment portion 80 and second active portion 84. Attachment portion 80 includes an opening 86 therein which is fitted over port 18f such that attachment portion 80 circumferentially surrounds, and circumferentially engages, port 18f in order to attach pressure pulsation damper wall 70 to outlet conduit 18. Attachment portion 80 may be elastically deformed in order to be fitted over port 18f, and consequently, attachment portion 80 may apply a circumferential compressive force to port 18f directed inward toward port axis 18g and/or pressure pulsation damper axis 74. As should now be clear, attachment portion 80/opening 86 provides the only way into and out of pressure pulsation damper chamber 72. Attachment portion 80 may be fixed to port 18f, by way of non-limiting example only, using adhesives, ultrasonic welding, or clamping means such as a hose clamp or crimped band (not shown), or combinations thereof. It should be understood that if adhesives are used in order to secure attachment portion 80 to port 18f, attachment portion 80 is still viewed as circumferentially engaging port 18f.

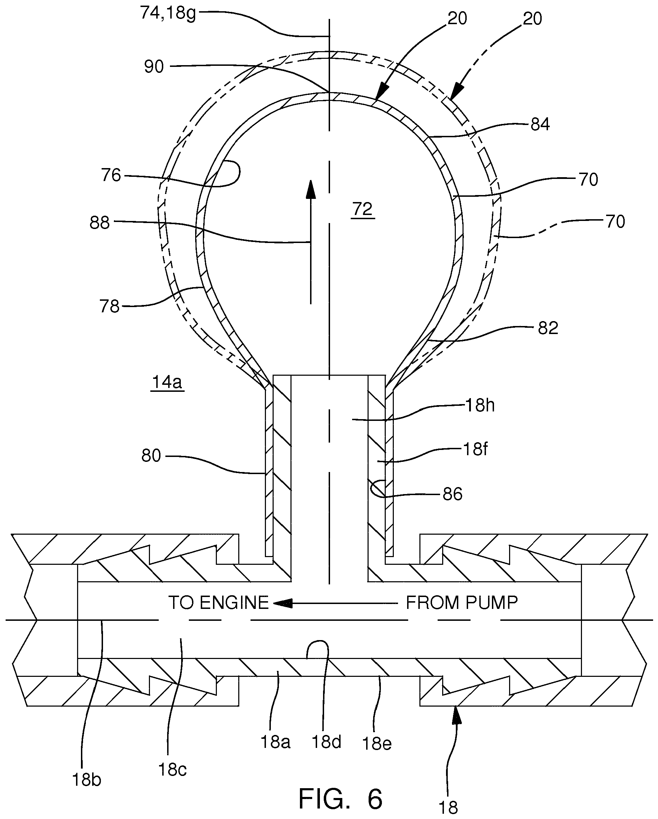

First active portion 82 diverges away from pressure pulsation damper axis 74 in a first direction 88 along pressure pulsation damper axis 74. In other words, first active portion 82 increase in diameter when moving from attachment portion 80 toward second active portion 84. Conversely, second active portion 84 converges toward pressure pulsation damper axis 74 in first direction 88 along pressure pulsation damper axis 74. In other words, second active portion 84 decreases in diameter when moving from first active portion 82 away from both attachment portion 80 and first active portion 82. Second active portion 84 terminates at an apex 90 such that pressure pulsation damper axis 74 intersects inner wall surface 76 and outer wall surface 78 at apex 90 and such that pressure pulsation damper axis 74 passes through, and intersects, second active portion 84 at apex 90. In operation, fuel pump 16 produces pressure pulsations which, if left unmitigated, may produce noise that is undesirable. However, since outlet conduit 18 is in fluid communication with pressure pulsation damper chamber 72, the pressure pulsations are permitted to enter pressure pulsation damper chamber 72 which allows the pressure pulsations to expand first active portion 82 and second active portion 84 of pressure pulsation damper wall 70, thereby increasing the volume of pressure pulsation damper chamber 72 and also thereby mitigating the pressure pulsations. FIG. 6 includes pressure pulsation damper wall 70 shown expanded in phantom lines as a result of a pressure pulsation, however, it should be noted that the magnitude of expansion of pressure pulsation damper wall 70 has been exaggerated for illustrative clarity.

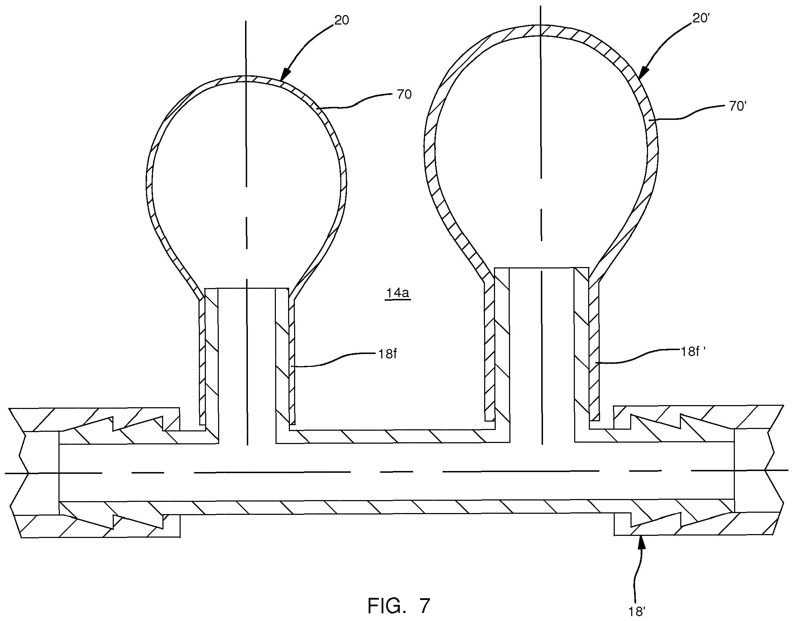

As is commonly known to those of ordinary skill in the art of fuel pumps, pressure pulsations of different frequencies are produced depending on the design of the particular fuel pump. Consequently, pressure pulsation damper 20 may be tailored to mitigate the pressure pulsations produced by the particular fuel pump 16 used in fuel system 10. Tailoring pressure pulsation damper 20 to mitigate pressure pulsations in particular frequency ranges may be accomplished by one or more of the following: material selection for pressure pulsation damper wall 70, a thickness 92 of pressure pulsation damper wall 70, axial length of pressure pulsation damper wall 70, profile of pressure pulsation damper wall 70/inner wall surface 76/outer wall surface 78, diameter of pressure pulsation damper wall 70, and cross-sectional area (perpendicular to pressure pulsation damper axis 74) of opening 86, as well as altering the axial length of port 18f and cross-sectional area (perpendicular to port axis 18g) of port internal volume 18h. Determination of the specifics of these features which result in mitigating pressure pulsations of the desired frequency may be accomplished by one or more of finite element analysis (FEA), computational fluid dynamics (CFD) analysis, empirical testing, and trial and error. Furthermore, if pressure pulsations in multiple frequency ranges need to be mitigated, two or more pressure pulsation dampers may be provided as shown in FIG. 7 which shows an outlet conduit 18' which differs from outlet conduit 18 in that outlet conduit 18' not only includes pressure pulsation damper 20, but also, according to the invention, includes a second pressure pulsation damper 20' such that pressure pulsation damper 20 mitigates pressure pulsations in a first frequency range and pressure pulsation damper 20' mitigates pressure pulsations in a second frequency range that is different than the frequency range. As can be seen in FIG. 7, pressure pulsation damper 20' includes the same general features as pressure pulsation damper 20, however, pressure pulsation damper 20' has been altered such that the profile, thickness, axial length, and diameter of pressure pulsation damper wall 70' have been altered compared to pressure pulsation damper wall 70 of pressure pulsation damper 20. Similarly, a port 18f to which pressure pulsation damper 20' is mounted differs from port 18f in axial length and cross-sectional area of the inner passage.

Pressure pulsation damper 20 and pressure pulsation damper 20' as described herein provide a simple and economical way to mitigate pressure pulsations in fuel system 10. Furthermore, since pressure pulsation damper 20 and pressure pulsation damper 20' are not constrained and are exposed to the same environment as outlet conduit 18 and outlet conduit 18' respectively, pressure pulsation dampers 20, 20' are not limited by other materials for the frequency range of pressure pulsations that are to be mitigated.

## Claims

1. A fuel system (10) for an internal combustion engine (12), said fuel system (10) comprising:
an outlet conduit (18,18') having an internal volume and also having an exterior surface (18e) that is exposed to an environment (14a); and
a pressure pulsation damper (20) which includes a pressure pulsation damper wall (70) made of a resilient and compliant polymer material which defines a pressure pulsation damper chamber (72), wherein when said pressure pulsation damper chamber (72) is filled with fuel, said pressure pulsation damper wall (70) extends along, and is centered about, a pressure pulsation damper axis (74) such that said pressure pulsation damper wall (70) circumferentially surrounds said pressure pulsation damper axis (74), thereby defining said pressure pulsation damper chamber (72) which is circumferentially surrounded by said pressure pulsation damper wall (70), said pressure pulsation damper wall (70) having an inner wall surface (76) which is in fluid communication with said internal volume of said outlet conduit (18,18') and also having an outer wall surface (78) which is exposed to said environment (14a) and
a second pressure pulsation damper (20') which includes a second pressure pulsation damper wall (70') made of a resilient and compliant polymer material which defines a second pressure pulsation damper chamber, wherein when said second pressure pulsation damper chamber is filled with fuel, said second pressure pulsation damper wall (70') extends along, and is centered about, a second pressure pulsation damper axis such that said second pressure pulsation damper wall (70') circumferentially surrounds said second pressure pulsation damper axis, thereby defining said second pressure pulsation damper chamber which is circumferentially surrounded by said second pressure pulsation damper wall (70'), said second pressure pulsation damper wall (70') having a second inner wall surface which is in fluid communication with said internal volume of said outlet conduit (18') and also having a second outer wall surface which is exposed to said environment (14a) and;
wherein the pressure pulsation damper wall (70) is sufficiently compliant such that prior to being filled with fuel supplied under pressure by a fuel pump (16), the pressure pulsation damper wall (70) is limp and has an undefined shape, similar to a common party balloon prior to being inflated.

2. A fuel system (10) as in claim 1, wherein when said pressure pulsation damper chamber (72) is filled with fuel, said pressure pulsation damper wall (70) includes a first active portion (82) which diverges away from said pressure pulsation damper axis (74) in a first direction (88) along said pressure pulsation damper axis (74) and also includes a second active portion (84) which extends from said first active portion (82) and converges toward said pressure pulsation damper axis (74) in said first direction (88) along said pressure pulsation damper axis (74).

3. A fuel system (10) as in claim 2, wherein:
said second active portion (84) terminates at an apex (90); and
said pressure pulsation damper axis (74) intersects said second active portion (84) at said apex (90).

4. A fuel system (10) as in claim 3, wherein said outer wall surface (78) is a surface of revolution about said pressure pulsation damper axis (74).

5. A fuel system (10) as in claim 1, wherein said pressure pulsation damper wall (70) includes an attachment portion (80) which circumferentially surrounds, and circumferentially engages, a port (18f) of said outlet conduit (18,18').

6. A fuel system (10) as in claim 5, wherein said pressure pulsation damper wall (70) includes a first active portion (82) which extends from said attachment portion (80) and which diverges away from said pressure pulsation damper axis (74) in a first direction (88) along said pressure pulsation damper axis (74) and said pressure pulsation damper wall (70) also includes a second active portion (84) which extends from said first active portion (82) and converges toward said pressure pulsation damper axis (74) in said first direction (88) along said pressure pulsation damper axis (74).

7. A fuel system (10) as in claim 6, wherein:
said second active portion (84) terminates at an apex (90); and
said pressure pulsation damper axis (74) intersects said second active portion (84) at said apex (90).

8. A fuel system (10) as in claim 1, further comprising a fuel tank (14) defining a fuel tank volume (14a) therein, wherein said fuel tank volume (14a) is said environment (14a).

9. A fuel system (10) as in claim 1, wherein the fuel pump (16) further comprises an inlet (44), an outlet (62), and a pumping element (38) which is configured to receive fuel from said inlet (44) and is configured to pump fuel to said outlet (62), wherein said outlet (62) is in fluid communication with said internal volume of said outlet conduit (18,18') such that said outlet (62) is in series between said inlet (44) and said pressure pulsation damper (20).

10. A fuel system (10) as in claim 9, wherein when said pressure pulsation damper chamber (72) is filled with fuel, said pressure pulsation damper wall (70) includes a first active portion (82) which diverges away from said pressure pulsation damper axis (74) in a first direction (88) along said pressure pulsation damper axis (74) and also includes a second active portion (84) which extends from said first active portion (82) and converges toward said pressure pulsation damper axis (74) in said first direction (88) along said pressure pulsation damper axis (74).

11. A fuel system (10) as in claim 10, wherein:
said second active portion (84) terminates at an apex (90); and
said pressure pulsation damper axis (74) intersects said second active portion (84) at said apex (90).

12. A fuel system (10) as in claim 11, wherein said outer wall surface (78) is a surface of revolution about said pressure pulsation damper axis (74).

13. A fuel system (10) as in claim 9, wherein said pressure pulsation damper wall (70) includes an attachment portion (80) which circumferentially surrounds, and circumferentially engages, a port (18f) of said outlet conduit (18,18').

14. A fuel system (10) as in claim 13, wherein said pressure pulsation damper wall (70) includes a first active portion (82) which extends from said attachment portion (80) and which diverges away from said pressure pulsation damper axis (74) in a first direction (88) along said pressure pulsation damper axis (74) and said pressure pulsation damper wall (70) also includes a second active portion (84) which extends from said first active portion (82) and converges toward said pressure pulsation damper axis (74) in said first direction (88) along said pressure pulsation damper axis (74).

## Patentansprüche

1. Kraftstoffsystem (10) für einen Verbrennungsmotor (12), wobei das Kraftstoffsystem (10) umfasst:
einen Auslasskanal (18, 18') mit einem Innenvolumen und auch mit einer Außenfläche (18e), die einer Umgebung (14a) ausgesetzt ist, und
einen Druckpulsationsdämpfer (20), der eine Druckpulsationsdämpferwand (70) einschließt, die aus einem belastbaren und nachgiebigen Polymermaterial gefertigt ist, die eine Druckpulsationsdämpferkammer (72) definiert, wobei, wenn die Druckpulsationsdämpferkammer (72) mit Kraftstoff gefüllt ist, die Druckpulsationsdämpferwand (70) sich entlang einer Druckpulsationsdämpferachse (74) erstreckt und um diese zentriert ist, so dass die Druckpulsationsdämpferwand (70) die Druckpulsationsdämpferachse (74) umfänglich umgibt, wodurch die Druckpulsationsdämpferkammer (72), die von der Druckpulsationsdämpferwand (70) umfänglich umgeben ist, definiert wird, wobei die Druckpulsationsdämpferwand (70) eine Innenwandfläche (76), die in Fluidverbindung mit dem Innenvolumen des Auslasskanals (18, 18') steht, und auch eine Außenwandfläche (78) aufweist, die der Umgebung (14a) ausgesetzt ist, und
einen zweiten Druckpulsationsdämpfer (20'), der eine zweite Druckpulsationsdämpferwand (70') einschließt, die aus einem belastbaren und nachgiebigen Polymermaterial gefertigt ist, das eine zweite Druckpulsationsdämpferkammer definiert, wobei, wenn die zweite Druckpulsationsdämpferkammer mit Kraftstoff gefüllt ist, die zweite Druckpulsationsdämpferwand (70') sich entlang einer zweiten Druckpulsationsdämpferachse erstreckt und um diese zentriert ist, so dass die zweite Druckpulsationsdämpferwand (70') die zweite Druckpulsationsdämpferachse umfänglich umgibt, wodurch die zweite Druckpulsationsdämpferkammer, die von der zweiten Druckpulsationsdämpferwand (70') umfänglich umgeben ist, definiert wird, wobei die zweite Druckpulsationsdämpferwand (70) eine zweite Innenwandfläche, die in Fluidverbindung mit dem Innenvolumen des Auslasskanals (18') steht, und auch eine zweite Außenwandfläche aufweist, die der Umgebung (14a) ausgesetzt ist, und
wobei die Druckpulsationsdämpferwand (70) ausreichend nachgiebig ist, dass, bevor sie mit Kraftstoff gefüllt wird, der unter Druck von einer Kraftstoffpumpe (16) zugeführt wird, die Druckpulsationsdämpferwand (70) schlaff und von einer undefinierten Form ist, ähnlich wie bei einem üblichen Partyballon, bevor er aufgeblasen wird.

2. Kraftstoffsystem (10) nach Anspruch 1, wobei, wenn die Druckpulsationsdämpferkammer (72) mit Kraftstoff gefüllt ist, die Druckpulsationsdämpferwand (70) einen ersten aktiven Abschnitt (82) einschließt, der weg von der Druckpulsationsdämpferachse (74) in eine erste Richtung (88) entlang der Druckpulsationsdämpferachse (74) auseinanderläuft, und auch einen zweiten aktiven Abschnitt (84) einschließt, der sich von dem ersten aktiven Abschnitt (82) erstreckt und zu der Druckpulsationsdämpferachse (74) in der ersten Richtung (88) entlang der Druckpulsationsdämpferachse (74) zusammenläuft.

3. Kraftstoffsystem (10) nach Anspruch 2, wobei:
der zweite aktive Abschnitt (84) an einem Scheitel (90) endet und
die Druckpulsationsdämpferachse (74) den zweiten aktiven Abschnitt (84) an dem Scheitel (90) schneidet.

4. Kraftstoffsystem (10) nach Anspruch 3, wobei die Außenwandfläche (78) eine Umlauffläche um die Druckpulsationsdämpferachse (74) ist.

5. Kraftstoffsystem (10) nach Anspruch 1, wobei die Druckpulsationsdämpferwand (70) einen Anbringungsabschnitt (80) einschließt, der einen Anschluss (18f) des Auslasskanals (18, 18') umfänglich umgibt und umfänglich mit diesem im Eingriff ist.

6. Kraftstoffsystem (10) nach Anspruch 5, wobei die Druckpulsationsdämpferwand (70) einen ersten aktiven Abschnitt (82) einschließt, der sich von dem Anbringungsabschnitt (80) erstreckt und von der Druckpulsationsdämpferachse (74) weg in einer ersten Richtung (88) entlang der Druckpulsationsdämpferachse (74) auseinanderläuft, und die Druckpulsationsdämpferwand (70) auch einen zweiten aktiven Abschnitt (84) einschließt, der sich von dem ersten aktiven Abschnitt (82) erstreckt und zu der Druckpulsationsdämpferachse (74) in der ersten Richtung (88) entlang der Druckpulsationsdämpferachse (74) zusammenläuft.

7. Kraftstoffsystem (10) nach Anspruch 6, wobei:
der zweite aktive Abschnitt (84) an einem Scheitel (90) endet und die Druckpulsationsdämpferachse (74) den zweiten aktiven Abschnitt (84) an dem Scheitel (90) schneidet.

8. Kraftstoffsystem (10) nach Anspruch 1, ferner umfassend einen Kraftstofftank (14), der ein Kraftstofftankvolumen (14a) in sich definiert, wobei das Kraftstofftankvolumen (14a) die Umgebung (14a) ist.

9. Kraftstoffsystem (10) nach Anspruch 1, wobei die Kraftstoffpumpe (16) ferner einen Einlass (44), einen Auslass (62) und ein Pumpelement (38) umfasst, das dafür konfiguriert ist, Kraftstoff von dem Einlass (44) zu empfangen, und dafür konfiguriert ist, Kraftstoff zu dem Auslass (62) zu pumpen, wobei der Auslass (62) in Fluidverbindung mit dem Innenvolumen des Auslasskanals (18, 18') steht, so dass der Auslass (62) in Reihe zwischen dem Einlass (44) und dem Druckpulsationsdämpfer (20) angeordnet ist.

10. Kraftstoffsystem (10) nach Anspruch 9, wobei, wenn die Druckpulsationsdämpferkammer (72) mit Kraftstoff gefüllt ist, die Druckpulsationsdämpferwand (70) einen ersten aktiven Abschnitt (82) einschließt, der weg von der Druckpulsationsdämpferachse (74) in eine erste Richtung (88) entlang der Druckpulsationsdämpferachse (74) auseinanderläuft, und auch einen zweiten aktiven Abschnitt (84) einschließt, der sich von dem ersten aktiven Abschnitt (82) erstreckt und zu der Druckpulsationsdämpferachse (74) in der ersten Richtung (88) entlang der Druckpulsationsdämpferachse (74) zusammenläuft.

11. Kraftstoffsystem (10) nach Anspruch 10, wobei:
der zweite aktive Abschnitt (84) an einem Scheitel (90) endet und
die Druckpulsationsdämpferachse (74) den zweiten aktiven Abschnitt (84) an dem Scheitel (90) schneidet.

12. Kraftstoffsystem (10) nach Anspruch 11, wobei die Außenwandfläche (78) eine Umlauffläche um die Druckpulsationsdämpferachse (74) ist.

13. Kraftstoffsystem (10) nach Anspruch 9, wobei die Druckpulsationsdämpferwand (70) einen Anbringungsabschnitt (80) einschließt, der einen Anschluss (18f) des Auslasskanals (18, 18') umfänglich umgibt und umfänglich mit diesem im Eingriff ist.

14. Kraftstoffsystem (10) nach Anspruch 13, wobei die Druckpulsationsdämpferwand (70) einen ersten aktiven Abschnitt (82) einschließt, der sich von dem Anbringungsabschnitt (80) erstreckt und von der Druckpulsationsdämpferachse (74) weg in einer ersten Richtung (88) entlang der Druckpulsationsdämpferachse (74) auseinanderläuft, und die Druckpulsationsdämpferwand (70) auch einen zweiten aktiven Abschnitt (84) einschließt, der sich von dem ersten aktiven Abschnitt (82) erstreckt und zu der Druckpulsationsdämpferachse (74) in der ersten Richtung (88) entlang der Druckpulsationsdämpferachse (74) zusammenläuft.

## Revendications

1. Système de carburant (10) pour un moteur à combustion interne (12), ledit système de carburant (10) comprenant :
un conduit de sortie (18, 18') ayant un volume interne et ayant également une surface extérieure (18e) qui est exposée à un environnement (14a) ; et
un amortisseur de pulsation de pression (20) qui inclut une paroi (70) d'amortisseur de pulsation de pression constituée d'un matériau polymère résistant et flexible qui définit une chambre (72) d'amortisseur de pulsation de pression, dans lequel lorsque ladite chambre (72) d'amortisseur de pulsation de pression est remplie de carburant, ladite paroi (70) d'amortisseur de pulsation de pression s'étend le long, et est centrée autour, d'un axe (74) d'amortisseur de pulsation de pression de sorte que ladite paroi (70) d'amortisseur de pulsation de pression encercle de manière circonférentielle ledit axe (74) d'amortisseur de pulsation de pression, ce qui définit ladite chambre (72) d'amortisseur de pulsation de pression qui est encerclée de manière circonférentielle par ladite paroi (70) d'amortisseur de pulsation de pression, ladite paroi (70) d'amortisseur de pulsation de pression ayant une surface de paroi interne (76) qui est en communication fluidique avec ledit volume interne dudit conduit de sortie (18, 18') et ayant également une surface de paroi externe (78) qui est exposée audit environnement (14a) et
un second amortisseur de pulsation de pression (20') qui inclut une paroi (70') de second amortisseur de pulsation de pression constituée d'un matériau polymère résistant et flexible qui définit une chambre de second amortisseur de pulsation de pression, dans lequel lorsque ladite chambre de second amortisseur de pulsation de pression est remplie de carburant, ladite paroi (70') de second amortisseur de pulsation de pression s'étend le long, et est centrée autour, d'un axe de second amortisseur de pulsation de pression de sorte que ladite paroi (70') de second amortisseur de pulsation de pression encercle de manière circonférentielle ledit axe de second amortisseur de pulsation de pression, ce qui définit ladite chambre de second amortisseur de pulsation de pression qui est encerclée de manière circonférentielle par ladite paroi (70') de second amortisseur de pulsation de pression, ladite paroi (70') de second amortisseur de pulsation de pression ayant une seconde surface de paroi interne qui est en communication fluidique avec ledit volume interne dudit conduit de sortie (18') et ayant également une seconde surface de paroi externe qui est exposée audit environnement (14a) et ;
dans lequel la paroi (70) d'amortisseur de pulsation de pression est suffisamment flexible de sorte qu'avant d'être remplie de carburant alimenté sous pression par une pompe à carburant (16), la paroi (70) d'amortisseur de pulsation de pression est molle et possède une forme indéfinie, similaire à un ballon de baudruche classique avant son gonflage.

2. Système de carburant (10) selon la revendication 1, dans lequel lorsque ladite chambre (72) d'amortisseur de pulsation de pression est remplie de carburant, ladite paroi (70) d'amortisseur de pulsation de pression inclut une première partie active (82) qui diverge par rapport audit axe (74) d'amortisseur de pulsation de pression dans une première direction (88) le long dudit axe (74) d'amortisseur de pulsation de pression et inclut également une seconde partie active (84) qui s'étend à partir de ladite première partie active (82) et converge vers ledit axe (74) d'amortisseur de pulsation de pression dans ladite première direction (88) le long dudit axe (74) d'amortisseur de pulsation de pression.

3. Système de carburant (10) selon la revendication 2, dans lequel :
ladite seconde partie active (84) se termine au niveau d'un sommet (90) ; et
ledit axe (74) d'amortisseur de pulsation de pression croise ladite seconde partie active (84) au niveau dudit sommet (90).

4. Système de carburant (10) selon la revendication 3, dans lequel ladite surface de paroi externe (78) est une surface de révolution autour dudit axe (74) d'amortisseur de pulsation de pression.

5. Système de carburant (10) selon la revendication 1, dans lequel ladite paroi (70) d'amortisseur de pulsation de pression inclut une partie de fixation (80) qui encercle de manière circonférentielle, et vient en prise de manière circonférentielle avec, un accès (18f) dudit conduit de sortie (18, 18').

6. Système de carburant (10) selon la revendication 5, dans lequel ladite paroi (70) d'amortisseur de pulsation de pression inclut une première partie active (82) qui s'étend à partir de ladite partie de fixation (80) et qui diverge par rapport audit axe (74) d'amortisseur de pulsation de pression dans une première direction (88) le long dudit axe (74) d'amortisseur de pulsation de pression et ladite paroi (70) d'amortisseur de pulsation de pression inclut également une seconde partie active (84) qui s'étend à partir de ladite première partie active (82) et converge vers ledit axe (74) d'amortisseur de pulsation de pression dans ladite première direction (88) le long dudit axe (74) d'amortisseur de pulsation de pression.

7. Système de carburant (10) selon la revendication 6, dans lequel :
ladite seconde partie active (84) se termine au niveau d'un sommet (90) ; et
ledit axe (74) d'amortisseur de pulsation de pression croise ladite seconde partie active (84) au niveau dudit sommet (90).

8. Système de carburant (10) selon la revendication 1, comprenant en outre un réservoir de carburant (14) définissant un volume de réservoir de carburant (14a) en son sein, dans lequel ledit volume de réservoir de carburant (14a) est ledit environnement (14a).

9. Système de carburant (10) selon la revendication 1, dans lequel la pompe à carburant (16) comprend en outre une entrée (44), une sortie (62), et un élément de pompage (38) qui est configuré pour recevoir du carburant provenant de ladite entrée (44) et est configuré pour pomper du carburant vers ladite sortie (62), dans lequel ladite sortie (62) est en communication fluidique avec ledit volume interne dudit conduit de sortie (18, 18') de sorte que ladite sortie (62) est en série entre ladite entrée (44) et ledit amortisseur de pulsation de pression (20).

10. Système de carburant (10) selon la revendication 9, dans lequel lorsque ladite chambre (72) d'amortisseur de pulsation de pression est remplie de carburant, ladite paroi (70) d'amortisseur de pulsation de pression inclut une première partie active (82) qui diverge par rapport audit axe (74) d'amortisseur de pulsation de pression dans une première direction (88) le long dudit axe (74) d'amortisseur de pulsation de pression et inclut également une seconde partie active (84) qui s'étend à partir de ladite première partie active (82) et converge vers ledit axe (74) d'amortisseur de pulsation de pression dans ladite première direction (88) le long dudit axe (74) d'amortisseur de pulsation de pression.

11. Système de carburant (10) selon la revendication 10, dans lequel :
ladite seconde partie active (84) se termine au niveau d'un sommet (90) ; et
ledit axe (74) d'amortisseur de pulsation de pression croise ladite seconde partie active (84) au niveau dudit sommet (90).

12. Système de carburant (10) selon la revendication 11, dans lequel ladite surface de paroi externe (78) est une surface de révolution autour dudit axe (74) d'amortisseur de pulsation de pression.

13. Système de carburant (10) selon la revendication 9, dans lequel ladite paroi (70) d'amortisseur de pulsation de pression inclut une partie de fixation (80) qui encercle de manière circonférentielle, et vient en prise de manière circonférentielle avec, un accès (18f) dudit conduit de sortie (18, 18').

14. Système de carburant (10) selon la revendication 13, dans lequel ladite paroi (70) d'amortisseur de pulsation de pression inclut une première partie active (82) qui s'étend à partir de ladite partie de fixation (80) et qui diverge par rapport audit axe (74) d'amortisseur de pulsation de pression dans une première direction (88) le long dudit axe (74) d'amortisseur de pulsation de pression et ladite paroi (70) d'amortisseur de pulsation de pression inclut également une seconde partie active (84) qui s'étend à partir de ladite première partie active (82) et converge vers ledit axe (74) d'amortisseur de pulsation de pression dans ladite première direction (88) le long dudit axe (74) d'amortisseur de pulsation de pression.
